# EUROPEAN PATENT SPECIFICATION

(11) **EP 1 421 306 B1**
(45) Date of publication and mention of the grant of the patent: **28.06.2006**
(21) Application number: 01936792.9
(22) Date of filing: 14.05.2001
(51) Int. Cl.: F16K 5/06

(54) **VALVE WITH METAL SEAL BETWEEN THE COUPLED PARTS OF ITS BODY**
HAHN MIT METALLISCHER DICHTUNG ZWISCHEN DEN GEHÄUSETEILEN
ROBINET A JOINT D'ETANCHEITE METALLIQUE ENTRE LES PARTIES COUPLEES DE SON CORPS

(43) Date of publication of application: 26.05.2004
(73) Proprietor: Rubinetterie Utensilerie Bonomi S.r.L., 25080 Ciliverghe di Mazzano (IT)
(72) Inventor: BONOMI, Luciano, I-25123 Brescia (IT); RABAIOLI, Sandro, I-25134 Bescia (IT); VALDESTURLO, Daniele, I-25014 Castenedolo (IT)
(74) Representative: Sangiacomo, Fulvia
(86) International application number: PCT/IT2001/000233
(87) International publication number: WO 2002/093051

(56) References cited:
- WO-A-84/04794
- DE-C- 883 374
- US-A- 1 973 418
- US-A- 3 380 709
- US-B1- 6 196 262

## Description

This invention concerns valves with a body consisting of at least two metal parts, coupled together as in a ball valve that contains a rotating ball shutter and a valve gland screwed onto the body.

In these valves, the hermetic seal between the coupled parts of the body is usually made by interposing gaskets in elastomeric material, which, anyway, represent additional elements that are added at the moment of assembling the valve, and which do not preclude problems of efficiency, maintenance, etc.

Document WO 84/04794 discloses a valve for cryogenic service comprising a body and an insert retained within said body by a screw threaded engagement. The body and the insert have respective circular surfaces which fit together when the two parts are assembled. However, the simple fitting of the circular surfaces cannot ensure an effective seal between the body and the insert.

The aim of this invention is to propose valves, in particular ball valves, with a metal seal between the two connected parts of their body and with the advantages of eliminating the usual added gaskets, of simplifying the assembly of the valves and ensuring an effective seal that lasts, under all conditions of use and with any fluid, whether liquid or gas. In other terms, the seal between the coupled metal parts is obtained by using portions of the same material with which those parts are made, and integral with them.

Correspondingly, a valve according to the invention consists of a body composed of at least two metal parts that screw together and where, on the circular surfaces of said two parts designed to match when assembled, there are circular coupling sections that fit tightly together, fastening together and jointly giving a metal seal.

The circular coupling parts may take various geometrical shapes and may, anyway, be made by working the corresponding interlocking surfaces.

Several examples of models of a metal seal for the valve body are shown in the drawings enclosed, by way of example, and these will be described in greater detail below. In these drawings:
Fig. 1 shows, in cross-section, the two separated parts of a valve body and in (A) and (B) the enlarged views of the parts designed to fit together to give a hermetic seal, according to a first version of the invention;
Fig. 2 shows the assembled body valve and in (C) and (D) two enlarged areas seen before and after the two parts of the body valve have been fastened together;
Figs 3, (A) and (B), show similar views to those of Figs 1, (A) and (B), but with a second version of the sealing parts;
Figs 4, (C) and (D), show views similar to those of Figs 2, (C) and (D), with the presence of sealing parts like those of Figs 3, (A) and (B); and
Figs 5 and 6, (A), (B), (C), (D); 7 and 8, (A), (B), (C), (D); 9 and 10, (A), (B), (C), (D); 11 and 12, (A), (B), (C), (D) show, respectively, similar views to those in Figs 1 and 2, (A), (B), (C), (D) but with further versions of the sealing parts.

A valve body 10 for a ball valve as illustrated in the drawings consists of a real and proper body 11, designed to contain a rotating ball shutter, not shown, with relative gaskets and an element called a valve gland 12 which is screwed co-axially onto the body 11. The body 11 and the valve gland 12 have circular surfaces 13 and 14 which are designed to fit when they are tightly screwed together. At the height of said surfaces, there are one or more circular coupling parts 15 and 16, respectively, which match to give a metal seal between the body and the valve gland, once they are assembled.

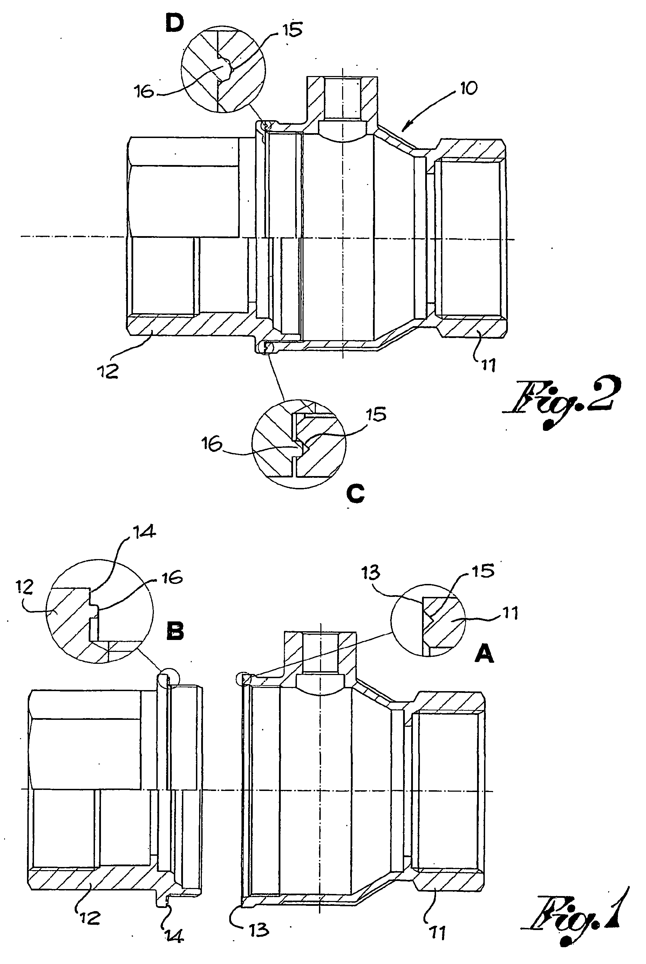

In the version shown in Figs 1 and 2, the matching circular surfaces 13, 14 are defined by opposing shoulders which come to rest against each other in an axial direction once the elements 11, 12 have been screwed together. The circular coupling parts for the metal seal consist of a throat 15 with converging sides made in one (13) of said circular surfaces and of a collar or prismatic circular projection 16 made on the other surface (14) and designed to catch in the throat 15.

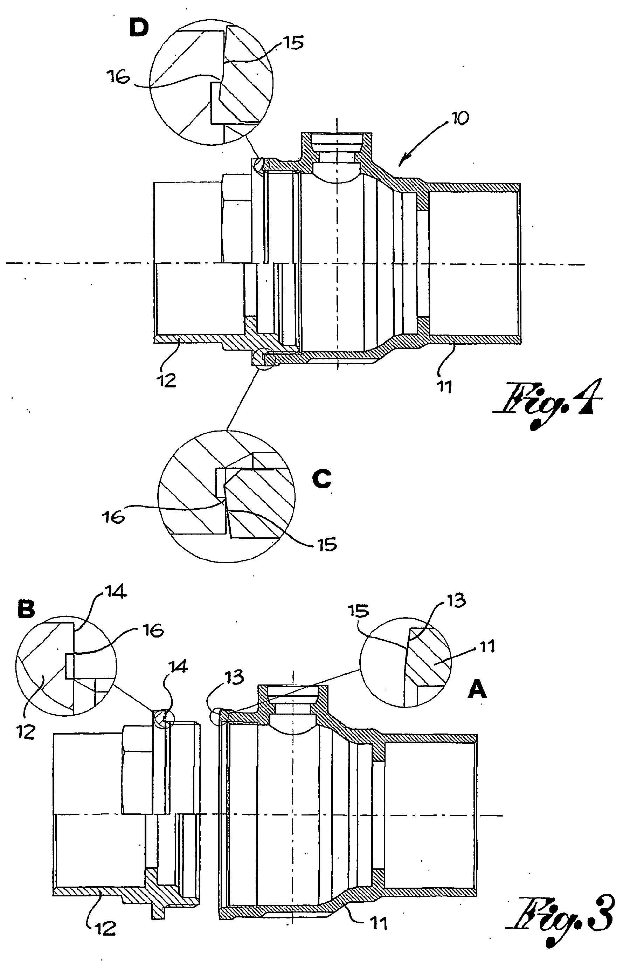

Likewise, in the version shown in Figs 3 and 4, the matching circular surfaces 13, 14 are defined by opposing shoulders, while the circular coupling parts for the metal seal consist of an inclined circular plane 15, made on one (13) of said surfaces and of a circular edge 16 made on the opposite surface (14) and designed to fit with the said inclined plane.

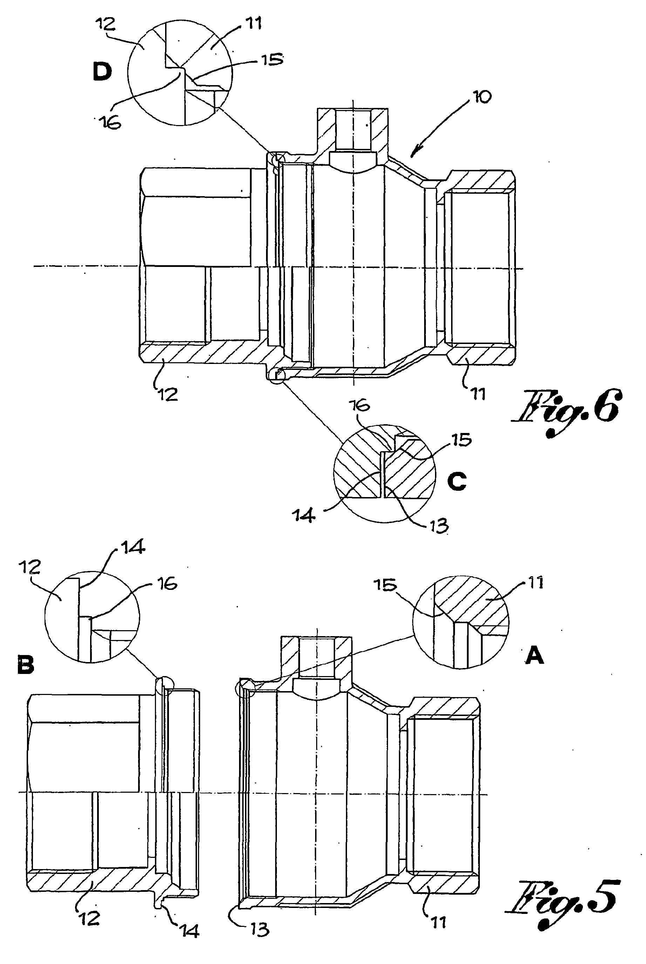

Similarly, in the version shown in Figs 5 and 6, the matching circular surfaces 13, 14 are defined by opposing shoulders on the elements 11, 12, respectively, while the circular coupling parts for the metal seal are represented by a circular chamfer 15 made on one (13) of said surfaces and by a circular step 16 made on the opposite surface (14) and interacting and fastening by means of an edge against said chamfer 15.

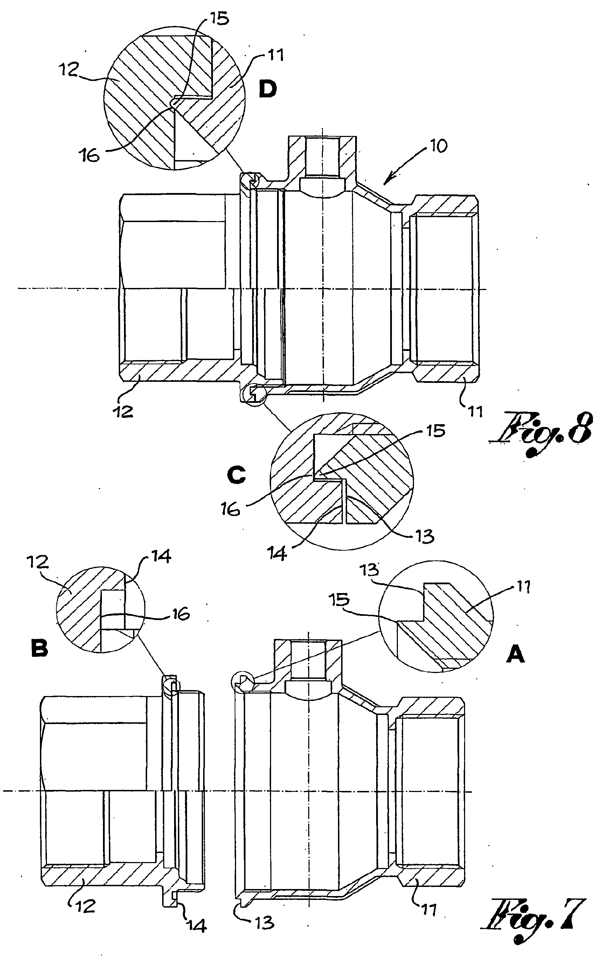

In the version shown in Figs 7 and 8, the matching circular surfaces 13, 14 of elements 11, 12 are also defined by opposing shoulders, while the circular coupling parts for the metal seal consist of a circular cuneiform projection 15 made on one (13) of said surfaces and of a circular throat 16 made in the opposite surface (14) in such a way that the cuneiform projection 15 rests against and holds, with its point, the bottom of said throat 16.

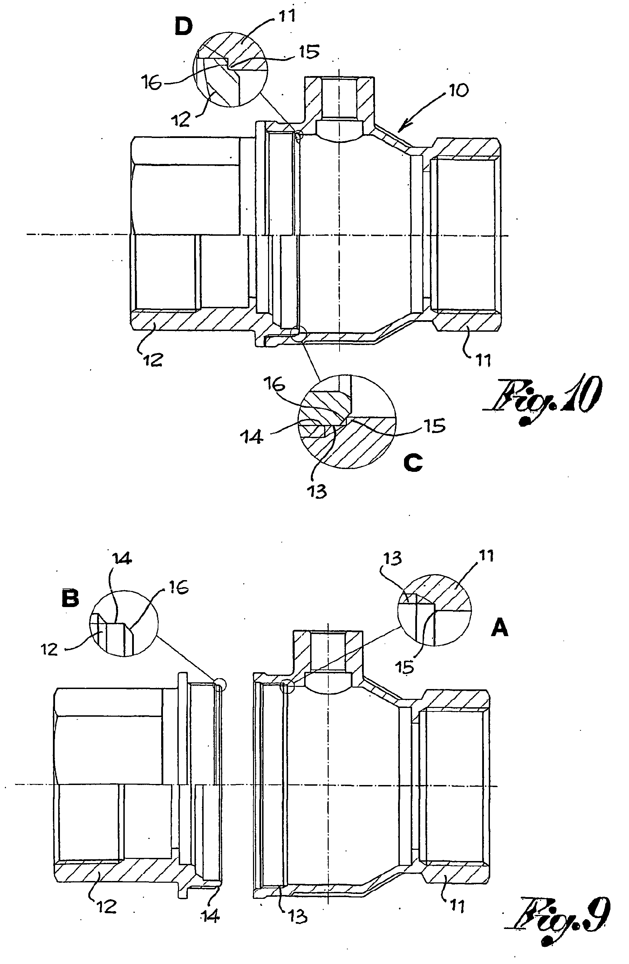

In the example shown in Figs 9 and 10, the matching circular surfaces 13, 14 are foreseen, respectively, inside the body 11 at the end of the coupling thread and at the end of the valve gland 12 that screws onto the body. In this case, the circular coupling parts for the metal seal consist of a circular step 15 made on one (13) of said surfaces and of a chamfer 16 on the opposite surface 14, in such a way as to interlock when the body and the valve gland are assembled.

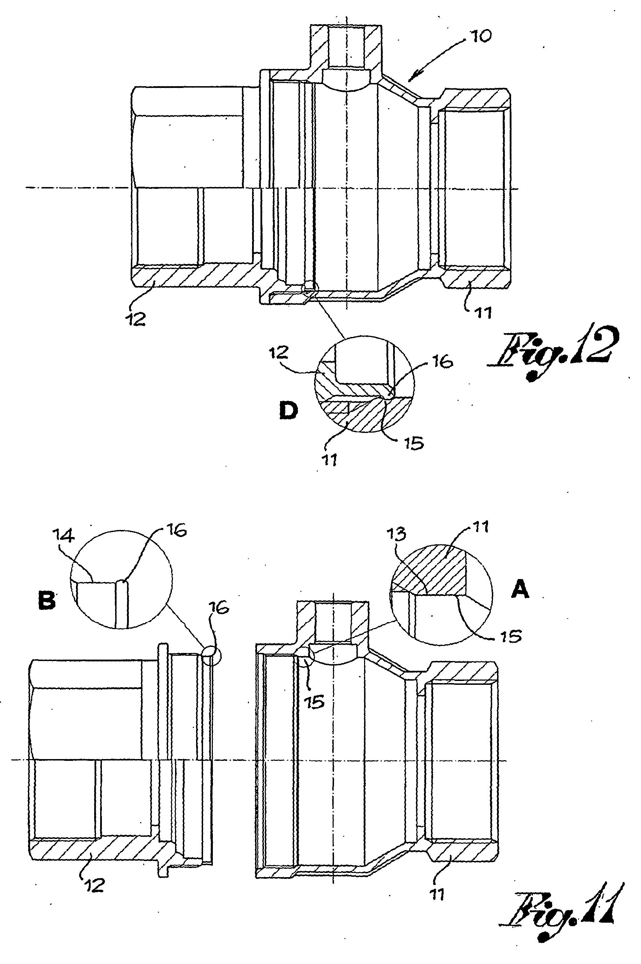

Likewise, in the example shown in Figs 11 and 12 the matching circular surfaces 13, 14 are inside the body 11 and at the end of the valve gland, respectively. The circular coupling parts are constituted here by an internal collar 15 made on the surface 13 and by a collar and circular boundary projection 16 on the surface 14, in such a way that said projection interacts with the collar 15 when the two components 11 and 12 are assembled.

Clearly, other shapes can be chosen and adopted for the coupling parts in the metal seal between the components of the valve body while still adhering to the aim of the present invention, namely, getting two complementary metal parts to interlock tightly when said parts are assembled.

## Claims

1. Valve, in particular a ball valve, consisting of a body composed of at least two metal parts (11, 12) that screw together, wherein said parts of the body valve have, respectively, circular surfaces (13, 14) designed to fit together when the parts are assembled, **characterized in that** on said circular surfaces (13, 14) there are one or more circular coupling parts (15, 16) having interlocking geometrical shapes forming a metal seal when assembled..

2. Valve according to claim 1, in which said circular surfaces (13, 14) that are designed to fit together are defined by opposing shoulders made on said metal parts and which rest against each other in an axial direction when the parts (11, 12) of the valve body are assembled.

3. Valve according to claims 1 and 2, in which the circular coupling parts for the metal seal consist of a circular throat (15) with converging sides made on one of said surfaces (13) and a circular prismatic projection (16) on the opposite surface (14), designed to fit into said throat.

4. Valve according to claims 1 and 2, in which the circular coupling parts for the metal seal consist of an inclined circular plane (15) made in one of said surfaces (13) and a circular edge (16) on the opposite surface (14) designed to interlock with said inclined plane.

5. Valve according to claims 1 and 2, in which the circular coupling parts for the metal seal consist of a circular chamfer (15) on one of said surfaces (13) and a circular step (16) on the opposite surface (14), which uses an edge to fasten on to said chamfer.

6. Valve according to claims 1 and 2, in which the circular coupling parts for the metal seal consist of a circular cuneiform projection (15) on one of said surfaces (13) and a circular throat (16) in the opposite surface (14), the point of said cuneiform projection (15) fitting into the bottom of said throat.

7. Valve according to claim 1, in which said circular surfaces (13, 14), which are designed to match together, are inside one of the metal parts and at the end of the other metal part, respectively.

8. Valve according to claim 7, in which the circular coupling parts for the metal seal consist of at least one circular step (15) on one of said surfaces (13) and of a chamfer (16) on the opposite surface (14) against which said step (15) interacts with an edge.

9. Valve according to claim 7, in which the circular coupling parts for the metal seal consist of an internal collar (15) on one of said surfaces and of a circular peripheral projection on the opposite surface (14), designed to interact with said collar.

## Patentansprüche

1. Hahn, insbesondere Kugelhahn, welcher aus einem Gehäuse mit mindestens zwei zusammenzuschraubenden Metallteilen (11, 12) besteht, wobei die besagten Ventilgehäuseteile jeweils runde Oberflächen (13,14) aufweisen, welche nach Montage der Teile übereinstimmen müssen, und die sich **dadurch** auszeichnen, dass sich auf den besagten runden Oberflächen (13,14) ein oder mehrere ringförmige Verbindungsteile (15, 16), welche zu ihrer Kupplung geometrische Formen haben, um nach der Montage eine Metalldichtung zu bilden, befinden.

2. Hahn nach Anspruch 1, bei dem die besagten runden übereinzustimmenden Oberflächen (13, 14) durch entgegengesetzte und aus den besagten Teilen herausgearbeitete und nach Montage der Teile (11,12) des Ventilgehäuses in Axialrichtung aneinandergelehnte Schultern bestimmt werden, bestehen.

3. Hahn nach den Ansprüchen 1 und 2, bei dem die runden Kupplungsteile für eine Metalldichtung aus einer ringförmigen Rille (15) mit konvergierenden Seiten, die aus einer der besagten Oberflächen (13) herausgearbeitet ist, und einem prismatischen ringförmigen Kante (16) auf der entgegengesetzten Oberfläche, die in die besagte Rille astet, bestehen..

4. Hahn nach den Ansprüchen 1 und 2, bei dem die runden Kupplungsteile für die Metalldichtung aus einer geneigten ringförmigen Fläche (15), die aus einer der besagten Oberflächen (13) herausgearbeitet ist, und einer ringförmigen Stufe (16) auf der entgegengesetzten Oberfläche (14), die mit der besagten geneigten Fläche gekoppelt werden muss, bestehen.

5. Hahn nach den Ansprüchen 1 und 2, bei dem die runden Kupplungsteile für die Metalldichtung aus einer ringförmigen Schrägkante (15) auf einer der besagten Oberflächen (13) und einer ringförmigen Stufe (16) auf der entgegengesetzten Oberfläche (14), die zur Überlagerung mit der besagten Schrägkante als Kante benutzt wird, bestehen.

6. Hahn nach den Ansprüchen 1 und 2, bei dem die runden Kupplungsteile für die Metalldichtung aus einer ringförmigen Ausladung in der Form eines Keiles (15) auf einer der besagten Oberflächen (13) und einer ringförmigen Rille (16) auf der entgegengesetzten Oberfläche (14) bestehen, und die Spitze der besagten ringförmigen Ausladung (15) in Form eines Keiles, indem sie in den Boden der besagten Rille einrastet, bestehen..

7. Hahn nach Anspruch 1, bei dem sich die besagten sich zu verbindenden runden Oberflächen (13,14) jeweils im Inneren von einem und am Ende des anderen Metallteils befinden.

8. Hahn, nach Anspruch 7, bei dem die runden Kupplungsteile für die Metalldichtung aus mindestens einer ringförmigen Stufe (15) auf einer der besagten Oberflächen (13) und einer Schrägkante (16) auf der entgegengesetzten Oberfläche (14), gegen welche die besagte Stufe (15) mit einer Kante zusammenwirkt, bestehen.

9. Hahn nach Anspruch 7, bei dem die runden Kupplungsteile für die Metalldichtung aus einem inneren Ring (15) auf einer der besagten Oberflächen und einer ringförmigen peripheren Ausladung (16) auf der entgegengesetzten Oberfläche (14), die mit den besagten Ring zusammenwirken muss, bestehen.

## Revendications

1. Robinet, en particulier robinet à sphère, comprenant un corps composé d'au moins deux parties métalliques (11, 12) qui se vissent ensemble, où lesdites parties du corps de robinet ont, respectivement, des surfaces circulaires (13, 14) destinées à coïncider quand les parties sont assemblées, **caractérisé en ce que** sur lesdites surfaces circulaires (13, 14) il y a une ou plusieurs portions circulaires d'accouplement (15, 16) ayant des profils géométriques pour s'accoupler afin de former un joint d'étanchéité métallique lorsqu'elles sont assemblées.

2. Robinet selon la revendication 1, dans lequel les lesdites surfaces circulaires (13, 14) destinées à coïncider sont définies par des épaulements opposés aménagés sur lesdites parties métalliques et qui s'appuient l'une contre l'autre dans une direction axiale quand les parties (11, 12) du corps de robinet sont assemblées.

3. Robinet selon les revendications 1 et 2, dans lequel les portions circulaires d'accouplement pour un joint d'étanchéité métallique consistent en un col annulaire (15) avec côtés convergents, aménagé sur une desdites surfaces (13), et en une saillie annulaire prismatique (16) sur la surface opposée, destinée à s'engager dans ledit col.

4. Robinet selon les revendications 1 et 2, dans lequel les portions circulaires d'accouplement pour le joint d'étanchéité métallique consistent en un plan annulaire incliné (15) aménagé dans une desdites surfaces (13) et en une arête annulaire (16) sur la surface opposée (14), destinée à interagir avec ledit plan incliné.

5. Robinet selon les revendications 1 et 2, dans lequel les portions circulaires d'accouplement pour le joint d'étanchéité métallique consistent en un chanfrein annulaire (15) sur une desdites surfaces (13) et en un échelon annulaire (16) sur la surface opposée (14) qui s'utilise comme une arête pour interférer avec ledit chanfrein.

6. Robinet selon les revendications 1 et 2 dans lequel les portions annulaires d'accouplement pour l'étanchéité métallique consistent en une saillie annulaire à forme de coin (15) sur une desdites surfaces (13) et en un col annulaire (16) sur la surface opposée (14), la pointe de ladite saille cunéiforme (15) interférant avec le fond dudit col.

7. Robinet selon la revendication 1, dans lequel lesdites surfaces circulaires (13, 14) destinées à se combiner sont à l'intérieur de l'une des parties métalliques et à l'extrémité de l'autre partie métallique, respectivement.

8. Robinet selon la revendication 7, dans lequel les portions annulaires d'accouplement pour le joint d'étanchéité métallique consistent au moins en un échelon annulaire (15) sur une desdites surfaces (13) et en un arrondissement (16) sur la surface opposée (14) contre lequel ledit échelon (15) interagit avec une arête.

9. Robinet selon la revendication 7, dans lequel les portions annulaires d'accouplement pour le joint d'étanchéité métallique consistent en un anneau interne (15) sur une desdites surfaces et en une saillie annulaire périphérique (16) sur la surface opposée (14), destinée à interagir avec ledit anneau.
